(19) Europäisches Patentamt
European Patent Office
Office européen des brevets

(11) Veröffentlichungsnummer: **0 070 495**
**B1**

(12) # EUROPÄISCHE PATENTSCHRIFT

(45) Veröffentlichungstag der Patentschrift: **02.01.85**

(21) Anmeldenummer: **82106233.8**

(22) Anmeldetag: **13.07.82**

(51) Int. Cl.³: **C 07 C 83/06,** C 07 C 83/08, A 01 N 35/06, A 01 N 37/42, A 01 N 39/00

(54) **Cyclohexan-1,3-dion-derivate, Verfahren zu ihrer Herstellung und ihre Verwendung zur Bekämpfung unerwünschten Pflanzenwuchses.**

(30) Priorität: **22.07.81 DE 3128960**

(43) Veröffentlichungstag der Anmeldung: **26.01.83 Patentblatt 83/4**

(45) Bekanntmachung des Hinweises auf die Patenterteilung: **02.01.85 Patentblatt 85/1**

(84) Benannte Vertragsstaaten: **AT BE CH DE FR GB IT LI NL SE**

(56) Entgegenhaltungen: **DE - A - 2 822 304**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Jahn, Dieter, Dr., Burgunder Weg 8, D-6803 Edingen-Neckarhausen (DE)**
Erfinder: **Becker, Rainer, Dr., Sonnenwendstrasse 83, D-6702 Bad Duerkheim (DE)**
Erfinder: **Goetz, Norbert, Dr., Schoefferstrasse 25, D-6520 Worms (DE)**
Erfinder: **Wuerzer, Bruno, Dr., Dipl.-Landwirt, Ruedigerstrasse 13, D-6701 Otterstadt (DE)**

**EP 0 070 495 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft neue Cyclohexan-1,3-dion-derivate, Verfahren zur Herstellung dieser Verbindungen sowie Herbizide, die diese Verbindungen als Wirkstoffe enthalten.

Es ist bekannt, 5-Aryl-cyclohexan-1,3-dion-derivate zur selektiven Bekämpfung von unerwünschten Gräsern in breitblättrigen Kulturen zu verwenden (DE-A-2 439 104). Weiterhin ist bekannt, daß speziell die p-Substitution des Phenylringes Verträglichkeit des Wirkstoffs bei der grasartigen Kulturpflanze Weizen bewirkt (Proc. 4th International Congress of Pesticide Chemistry (IUPAC), 1978, S. 235). Die besten Resultate wurden hierbei mit dem p-Methyl-Rest erzielt, wie er im 2-(1-Ethoxyaminopropyliden)-5-(4-methylphenyl)-cyclohexan-1,3-dion vorliegt. Besonders bemerkenswert ist in der oben genannten Veröffentlichung die Feststellung, daß beim Alkoxyamino-alkyliden-rest der Übergang von Alkoxyaminopropyliden zu Alkoxyaminobutyliden sowohl zu einem Abfall der herbiziden Aktivität wie auch zu einer Verringerung der Verträglichkeit bei Kulturpflanzen führt. In den Versuchsbeschreibungen mit Weizen als Kulturpflanze sind ausschließlich 5-Aryl-cyclohexan-1,3-dion-derivate mit Ethoxyaminopropyliden-Resten als Wirkstoffe aufgeführt, die Weizen wenig schädigen.

Außerdem sind aus der DE-A-2 822 304 Cyclohexan-1,3-dion-derivate bekannt, die in 5-Stellung u. a. Phenylthioalkylen- oder Benzylthioalkylenreste tragen. Diese Wirkstoffe eignen sich zur Bekämpfung unerwünschter grasartiger Pflanzen; bezüglich ihrer Kulturpflanzenverträglichkeit werden keine Angaben gemacht.

Es wurde nun gefunden, daß Cyclohexan-1,3-dion-derivate der Formel

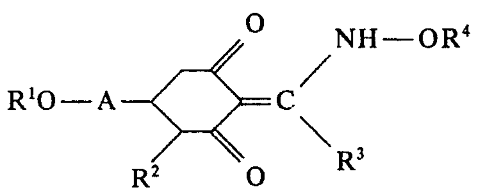

(I)

in der

- $R^1$ eine Alkenylgruppe mit 3 oder 4 Kohlenstoffatomen, einen gegebenenfalls durch Halogen, Alkyl, Alkoxy, Nitro, Cyano oder Sulfonyl substituierten Phenyl-, Benzyl-, 2-Phenylethyl- oder Phenylpropylrest,
- A einen Alkylen- oder Alkenylenrest mit bis zu 3 Kohlenstoffatomen, der durch 1 oder 2 Alkylgruppen mit 1 bis 5 Kohlenstoffatomen, eine Cyclohexylgruppe, eine Alkenylgruppe mit 2 oder 3 Kohlenstoffatomen, eine Ethinylgruppe oder einen Phenylrest substituiert sein kann,
- $R^2$ Wasserstoff, Alkoxycarbonyl mit einem oder zwei Kohlenstoffatomen im Alkoxyrest,
- $R^3$ Alkyl mit 1 bis 4 Kohlenstoffatomen und
- $R^4$ Alkyl mit 1 bis 3 Kohlenstoffatomen, Alkenyl mit 3 oder 4 Kohlenstoffatomen, Propargyl oder Halogenalkenyl mit 3 oder 4 Kohlenstoffatomen und 1 bis 3 Halogenatomen bedeuten,

und Salze dieser Verbindungen eine gute herbizide Wirkung gegen unerwünschte Gräser haben und für Getreide, vorzugsweise für Weizen, und andere Kulturpflanzen ein hohes Maß an Verträglichkeit zeigen.

Die Verbindungen der Formel I können in mehreren tautomeren Formen auftreten, die alle vom Patentanspruch umfaßt werden:

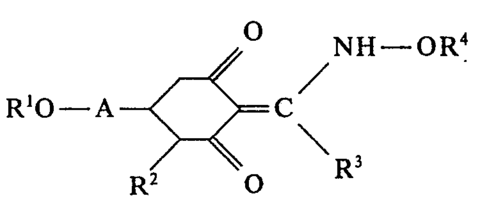

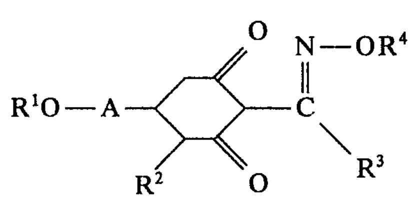

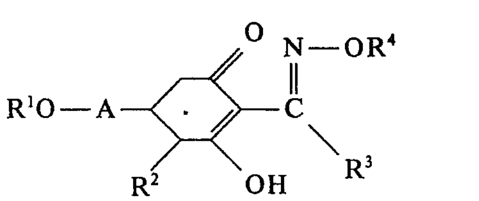

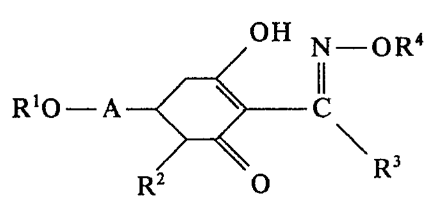

$R^1$ kann beispielsweise bedeuten:

Allyl, Benzyl, Fluorbenzyl, Chlorbenzyl, Brombenzyl, Dichlorbenzyl, Trichlorbenzyl, Nitrobenzyl, Cyanobenzyl, Methoxybenzyl, Methylbenzyl, Ethylbenzyl, tert.-Butylbenzyl, Dimethylbenzyl, Phenyl, Chlorphenyl, i-Propylphenyl, Dichlorphenyl, Methylphenyl, Dimethylphenyl, Methoxyphenyl, 2-Phenylethyl, 2-Phenyl-n-propyl.

A kann bedeuten:

Methylen, Methylmethylen, Ethylmethylen, Propylmethylen, Cyclohexylmethylen, Methylethylmethylen, Methylvinylmethylen, Methylpropinylmethylen, Propylmethylen, 4-Methylbutylmethylen, Phenylmethylen, Ethylen, Propylen, Methylpropylen, 1-Methylpropen-1-ylen.

$R^2$ kann bedeuten:

Wasserstoff, Methoxycarbonyl, Ethoxycarbonyl.

$R^3$ kann folgende Reste bedeuten:

Methyl, Ethyl, n-Propyl, i-Propyl, n-Butyl, sec.-Butyl, i-Butyl, tert.-Butyl.

$R^4$ kann beispielsweise bedeuten:

Methyl, Ethyl, n-Propyl, i-Propyl, n-Butyl, sec.-Butyl, i-Butyl, tert.-Butyl, Allyl, Propargyl, 1-Chlorpropen-1-yl-3, 2-Chlorpropen-1-yl-3, 1,2-Dichlorpropen-1-yl-3, 1,1,2-Trichlorpropen-1-yl-3.

Unter Salzen der Verbindungen der Formel I sind beispielsweise die Alkalisalze, insbesondere die Kalium- oder Natriumsalze, Mangan-, Kupfer-, Zink-, Eisen- und Bariumsalze zu verstehen.

Die Verbindungen können aus Verbindungen der Formel

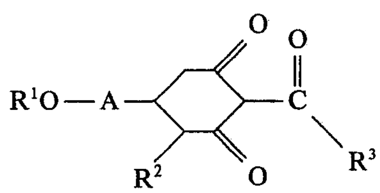

(II)

durch Umsetzung mit Hydroxylaminderivaten der Formel $R^4ONH_4Y$ erhalten werden, wobei $R^1$, A, $R^2$, $R^3$ und $R^4$ die oben angegebenen Bedeutungen haben und Y ein Anion bedeutet.

Man führt die Reaktion zweckmäßigerweise in heterogener Phase in einem inerten Lösungsmittel bei Temperaturen zwischen 0 und 80°C oder dem Siedepunkt des Gemisches in Gegenwart einer Base durch. Geeignete Basen sind beispielsweise Carbonate, Hydrogencarbonate, Acetate, Alkoholate, Hydroxide oder Oxide von Alkali- oder Erdalkalimetallen, insbesondere von Natrium und Kalium, sowie Magnesium und Calcium. Daneben können auch organische Basen, wie Pyridin oder tertiäre Amine, Verwendung finden.

Ein für die Umsetzung besonders geeigneter definierter pH-Bereich reicht von pH 2 bis pH 7, insbesondere von pH 4,5 bis pH 5,5. Die Einstellung des pH-Bereiches für die Umsetzung erfolgt vorteilhaft durch Zusatz von Acetaten, beispielsweise Alkaliacetaten, insbesondere Natrium- oder Kaliumacetat oder ihren Mischungen. Die Alkaliacetate werden beispielsweise in Mengen von 0,5 bis 2 Mol, bezogen auf die Ammoniumverbindung, eingesetzt.

Als Lösungsmittel sind beispielsweise Methanol, Ethanol, Isopropanol, Benzol, Tetrahydrofuran, Chloroform, Acetonitril, Dichlorethan, Essigsäureethylester, Dioxin, Dimethylsulfoxid geeignet.

Die Reaktion ist nach einigen Stunden beendet, das Reaktionsprodukt kann durch Einengen der Mischung, Zugabe von Wasser und Extraktion mit einem unpolaren Lösungsmittel sowie Abdestillieren des Lösungsmittels unter vermindertem Druck isoliert werden.

Darüber hinaus können die Verbindungen der Formel I durch Umsetzen der Verbindungen der Formel II mit Hydroxylaminen der Formel $R^4{-}O{-}NH_2$, wobei $R^4$ die oben genannten Bedeutungen hat, in inerten Lösungsmitteln bei Temperaturen von 0°C bis zum Siedepunkt des Gemisches, bevorzugt von 15 bis 70°C, erhalten werden.

Geeignete Lösungsmittel sind beispielsweise Methanol, Ethanol, Isopropanol, Cyclohexanol, Methylenchlorid, Toluol, Tetrahydrofuran, Acetonitril, Dichlorethan, Essigsäureethylester.

Die Natrium- und Kaliumsalze der Cyclohexan-1,3-dion-derivate können durch Behandeln dieser Verbindungen mit Natrium- oder Kaliumhydroxid in wäßriger Lösung oder in einem organischen Lösungsmittel, wie Methanol, Ethanol, Aceton, erhalten werden. Auch Natrium- und Kaliumalkoholate können als Basen dienen.

Andere Metallsalze, z.B. die Mangan-, Kupfer-, Zink-, Eisen- und Bariumsalze, können aus dem Natriumsalz durch Reaktion mit den entsprechenden Metallchoriden in wäßriger Lösung hergestellt werden.

Verbindungen der Formel II können aus Cyclohexan-1,3-dionen der Formel III, die auch in den tautomeren Formen IIIa und IIIb vorliegen können,

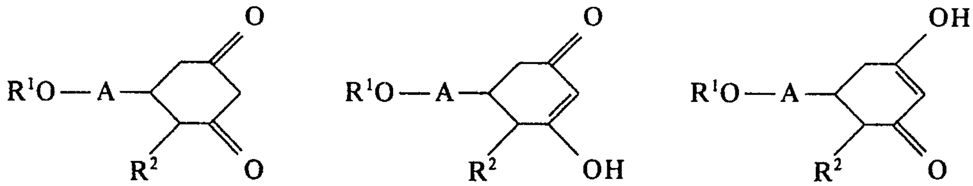

(III) (IIIa) (IIIb)

nach literaturbekannten Methoden (Tetrahedron Letters, Band 29, Seite 2491) hergestellt werden.

Es ist auch möglich, Verbindungen der Formel II über die Zwischenstufe der Enolester, die bei der Umsetzung von Verbindungen der Formel III eventuell als Isomerengemische anfallen und in Gegenwart von Imidazol- oder Pyridinderivaten umgelagert werden (JP-PS 54/063 052), herzustellen.

Zu den Verbindungen der Formel III gelangt man nach literaturbekannten Verfahren, wie dies aus folgendem Schema hervorgeht:

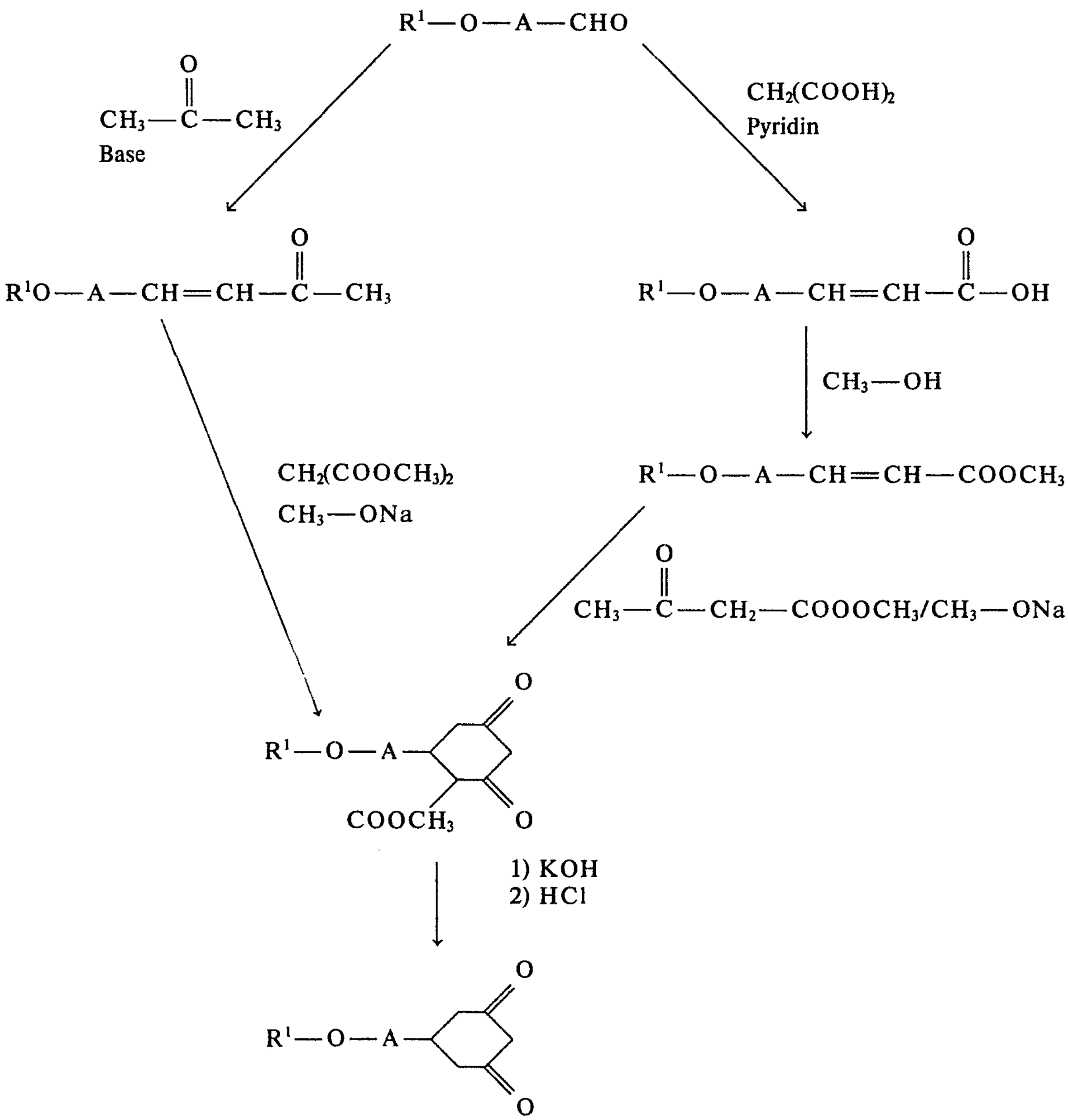

Die folgenden Beispiele erläutern die Herstellung der Cyclohexan-1,3-dion-derivate. In den Beispielen verhalten sich Gewichtsteile zu Volumenteilen wie Kilogramm zu Liter.

## Beispiel 1

10,5 Gewichtsteile 2-Butyryl-5-(4'-chlorbenzyloxiethanyliden)-cyclohexan-1,3-dion, 3,1 Gewichtsteile Ethoxyammoniumchlorid und 2,7 Gewichtsteile wasserfreies Natriumacetat in 100 Volumenteilen Ethanol werden bei Raumtemperatur 12 Stunden gerührt.

Das Lösungsmittel wird unter vermindertem Druck abdestilliert, der Rückstand mit 120 Teilen Wasser und 100 Teilen Methylenchlorid gerührt, die organische Phase abgetrennt, die wäßrige Phase mit 50 Teilen Methylenchlorid extrahiert, die vereinigten organischen Phasen mit Wasser gewaschen, über Natriumsulfat getrocknet und im Vakuum eingeengt. Man erhält 2-Ethoxyaminobutyliden-5-(4'-chlorbenzyloxyethanyliden)-cyclohexan-1,3-dion mit folgender Struktur:

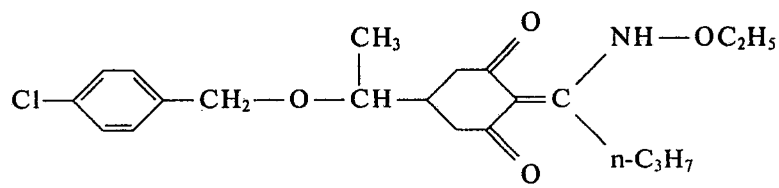

(Wirkstoff Nr. 1)

$n_D^{24}$: 1,5424

$C_{21}H_{28}ClNO_4$ (394)

ber.: C 64,03 H 7,16 N 3,56 Cl 9,00
gef.: C 63,9 H 7,0 N 3,7 Cl 9,3

## Beispiel 2

10,0 Gewichtsteile 2-Butyryl-5-(4'-methylbenzyloxiethanyliden)-cyclohexan-1,3-dion und 2,0 Gewichtsteile Ethoxyamin werden in 100 Volumenteilen Ethanol 12 Stunden bei Raumtemperatur gerührt. Das Lösungsmittel wird im Vakuum abdestilliert, der Rückstand mit 120 Teilen Wasser und 100 Teilen Methylenchlorid gerührt, die organische Phase abgetrennt, die wäßrige Phase mit 50 Teilen Methylenchlorid extrahiert, die vereinigten organischen Phasen über Natriumsulfat getrocknet und im Vakuum eingeengt. Man erhält 2-Ethoxyamino-butyliden-(4'-methylbenzyloxyethanyliden)-cyclohexan-1,3-dion als Öl (Wirkstoff Nr. 2).

$n_D^{22}$: 1,5343

$C_{22}H_{31}NO_4$ (373)

ber.: C 70,75 H 8,37 N 3,75
gef.: C 70,2 H 8,4 N 3,8

Die folgenden Verbindungen wurden in entsprechender Weise erhalten:

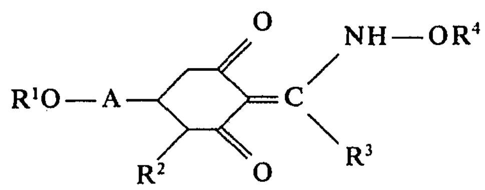

| Wirkstoff Nr. | $R^1$ | A | $R^2$ | $R^3$ | $R^4$ | $n_D$/Fp [°C] |
|---|---|---|---|---|---|---|
| 3 | 4-Methylbenzyl | $CH_3-CH<$ | H | $n-C_3H_7$ | Allyl | $n_D^{22}$ 1,5378 |
| 4 | 4-Chlorbenzyl | desgl. | H | desgl. | desgl. | $n_D^{24}$ 1,5472 |
| 5 | desgl. | desgl. | H | $C_2H_5$ | desgl. | $n_D^{27}$ 1,5510 |
| 6 | desgl. | desgl. | H | desgl. | Ethyl | $n_D^{27}$ 1,5468 |
| 7 | Benzyl | desgl. | H | $n-C_3H_7$ | desgl. | $n_D^{20}$ 1,5390 |
| 8 | desgl. | desgl. | H | desgl. | Allyl | $n_D^{29}$ 1,5386 |
| 9 | 2,4-Dichlorbenzyl | desgl. | H | desgl. | desgl. | $n_D^{22}$ 1,5552 |
| 10 | desgl. | desgl. | H | desgl. | Ethyl | $n_D^{22}$ 1,5519 |
| 21 | Allyl | desgl. | H | desgl. | desgl. | $n_D^{22}$ 1,5051 |
| 22 | desgl. | desgl. | H | desgl. | Allyl | $n_D^{22}$ 1,5115 |
| 23 | Benzyl | $(CH_3)_2CH-CH_2-CH_2-CH<$ | H | desgl. | desgl. | $n_D^{18}$ 1,5301 |
| 24 | desgl. | desgl. | H | desgl. | Ethyl | $n_D^{18}$ 1,5248 |
| 27 | desgl. | $CH_2=CH-C(<)-CH_3$ | H | desgl. | Allyl | $n_D^{31}$ 1,5457 |

Fortsetzung

| Wirkstoff Nr. | $R^1$ | A | $R^2$ | $R^3$ | $R^4$ | $n_D$/Fp [°C] |
|---|---|---|---|---|---|---|
| 28 | Benzyl | $CH_2{=}CH{-}\overset{\vert}{\underset{\vert}{C}}{-}CH_3$ | H | n-$C_3H_7$ | Ethyl | $n_D^{31}$ 1,5440 |
| 29 | desgl. | desgl. | H | desgl. | desgl. | $n_D^{18}$ 1,5429 |
| 30 | desgl. | desgl. | H | desgl. | Allyl | $n_D^{18}$ 1,5471 |
| 37 | 4-Chlorbenzyl | $CH_3{-}\underset{(OR^1)}{\underset{\vert}{CH}}{-}CH_2{-}$ | H | desgl. | Ethyl | $n_D^{32}$ 1,5389 |
| 50 | 2-Methylphenyl | $CH_3{-}\overset{\vert}{CH}{-}$ | H | desgl. | Allyl | $n_D^{21}$ 1,5487 |
| 67 | Phenyl | $-CH_2-$ | H | desgl. | Ethyl | FP: 31–34 |
| 68 | desgl. | desgl. | H | desgl. | Allyl | $n_D^{22}$ 1,552 |
| 72 | Allyl | $CH_3{-}\overset{\vert}{CH}{-}$ | H | desgl. | desgl. | $n_D^{22}$ 1,5115 |
| 73 | desgl. | desgl. | H | desgl. | Ethyl | $n_D^{22}$ 1,5051 |
| 74 | Benzyl | $-CH_2-$ | H | desgl. | $C_2H_5$ | $n_D^{20}$ 1,5390 |
| 75 | desgl. | $CH_3{-}\overset{\vert}{CH}{-}$ | $COOCH_3$ | desgl. | Ethyl | $n_D^{24}$ 1,5322 |
| 76 | desgl. | desgl. | desgl. | desgl. | Allyl | $n_D^{24}$ 1,5360 |
| 77 | Phenyl | desgl. | H | $C_2H_5$ | $C_2H_5$ | $n_D^{22}$ 1,5443 |
| 78 | desgl. | desgl. | H | desgl. | Allyl | $n_D^{22}$ 1,5532 |
| 87 | 2-Phenylethyl | desgl. | H | n-$C_3H_7$ | desgl. | $n_D^{23}$ 1,5469 |

Fortsetzung

| Wirkstoff Nr. | $R^1$ | A | $R^2$ | $R^3$ | $R^4$ | $n_D$/Fp [°C] |
|---|---|---|---|---|---|---|
| 88 | 2-Phenylethyl | $CH_3-CH-$ | H | $n-C_3H_7$ | Ethyl | $n_D^{23}$ 1,5426 |
| 89 | 4-Methylbenzyl | $CH_3-CH-CH_2-$<br>$(OR^1)$ | H | desgl. | desgl. | $n_D^{22}$ 1,5288 |
| 90 | desgl. | desgl. | H | desgl. | Allyl | $n_D^{22}$ 1,5332 |
| 91 | 3-Methoxybenzyl | desgl. | H | desgl. | desgl. | $n_D^{22}$ 1,5384 |
| 92 | desgl. | desgl. | H | desgl. | Ethyl | $n_D^{22}$ 1,5310 |
| 93 | Benzyl | $CH_3-CH-$ | H | desgl. | n-Propyl | $n_D^{29}$ 1,5286 |
| 94 | 4-Methylbenzyl | desgl. | H | desgl. | $-CH_2-CH{=}CHCl$ | $n_D^{21}$ 1,5483 |
| 95 | 2-Phenylpropyl | desgl. | H | desgl. | Ethyl | $n_D^{23}$ 1,5264 |
| 96 | desgl. | desgl. | H | desgl. | Allyl | $n_D^{23}$ 1,5305 |
| 97 | desgl. | $-CH_2-CH_2-$ | H | desgl. | desgl. | $n_D^{24}$ 1,5383 |
| 98 | desgl. | desgl. | H | desgl. | Ethyl | $n_D^{24}$ 1,5344 |

Entsprechend können die folgenden Verbindungen der Formel I erhalten werden:

| Wirkstoff Nr. | $R^1$ | A | $R^2$ | $R^3$ | $R^4$ | $n_D$/Fp [°C] |
|---|---|---|---|---|---|---|
| 11 | 4-Nitrobenzyl | $CH_3-CH-$ | H | $n\text{-}C_3H_7$ | Ethyl | |
| 12 | desgl. | desgl. | H | desgl. | Allyl | |
| 13 | 2-Chlorbenzyl | desgl. | H | desgl. | desgl. | |
| 14 | desgl. | desgl. | H | desgl. | Ethyl | |
| 15 | tert.-Butylbenzyl | desgl. | H | desgl. | desgl. | |
| 16 | desgl. | desgl. | H | desgl. | Allyl | |
| 17 | 3-Methylbenzyl | $CH_3-CH$ | H | desgl. | desgl. | |
| 18 | desgl. | desgl. | H | desgl. | Ethyl | |
| 19 | 3-Methoxybenzyl | desgl. | H | desgl. | desgl. | |
| 20 | desgl. | desgl. | H | desgl. | Allyl | |
| 25 | 4-Chlorbenzyl | $(CH_3)_2CH-CH_2-CH_2-CH-$ | H | desgl. | Ethyl | |
| 26 | desgl. | desgl. | H | desgl. | Allyl | |
| 31 | Benzyl | $C_2H_5-C-CH_3$ | H | desgl. | desgl. | |
| 32 | desgl. | desgl. | H | desgl. | Ethyl | |
| 33 | 4-Chlorbenzyl | desgl. | H | desgl. | desgl. | |

Fortsetzung

| Wirkstoff Nr. | $R^1$ | A | $R^2$ | $R^3$ | $R^4$ | $n_D$/Fp [°C] |
|---|---|---|---|---|---|---|
| 34 | 4-Chlorbenzyl | 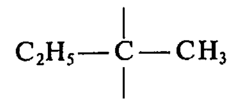 | H | n-$C_3H_7$ | Allyl | |
| 35 | desgl. | 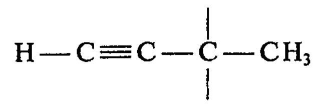 | H | desgl. | desgl. | |
| 36 | desgl. | desgl. | H | desgl. | Ethyl | |
| 38 | desgl. | 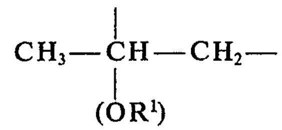 | H | desgl. | Allyl | |
| 39 | Phenyl | 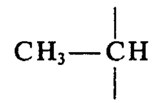 | H | desgl. | desgl. | |
| 40 | desgl. | desgl. | H | desgl. | Ethyl | |
| 41 | 4-Chlorphenyl | desgl. | H | desgl. | desgl. | |
| 42 | desgl. | desgl. | H | desgl. | Allyl | |
| 43 | 4-Methylphenyl | desgl. | H | desgl. | desgl. | |
| 44 | desgl. | desgl. | H | desgl. | Ethyl | |
| 45 | 4-Methoxyphenyl | desgl. | H | desgl. | desgl. | |
| 46 | desgl. | desgl. | H | desgl. | Allyl | |
| 47 | 3-Methylphenyl | desgl. | H | desgl. | desgl. | |
| 48 | desgl. | 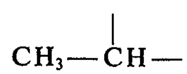 | H | desgl. | Ethyl | |

Fortsetzung

| Wirkstoff Nr. | $R^1$ | A | $R^2$ | $R^3$ | $R^4$ | $n_D$/Fp [°C] |
|---|---|---|---|---|---|---|
| 49 | 2-Methylphenyl | $CH_3-\overset{\vert}{C}H-$ | H | $n-C_3H_7$ | Ethyl | |
| 51 | 4-tert.-Butylphenyl | desgl. | H | desgl. | Allyl | |
| 52 | desgl. | desgl. | H | desgl. | Ethyl | |
| 53 | 2-i-Propylphenyl | desgl. | H | desgl. | desgl. | |
| 54 | desgl. | desgl. | H | desgl. | Allyl | |
| 55 | 3-Chlorphenyl | desgl. | H | desgl. | desgl. | |
| 56 | desgl. | desgl. | H | desgl. | Ethyl | |
| 57 | 2-Chlorphenyl | desgl. | H | desgl. | desgl. | |
| 58 | desgl. | desgl. | H | desgl. | Allyl | |
| 59 | 2,4-Dichlorphenyl | desgl. | H | desgl. | desgl. | |
| 60 | desgl. | desgl. | H | desgl. | Ethyl | |
| 61 | 2,4-Dimethylphenyl | desgl. | H | desgl. | desgl. | |
| 62 | desgl. | desgl. | H | desgl. | Allyl | |
| 63 | 3,5-Dimethylphenyl | desgl. | H | desgl. | desgl. | |
| 64 | desgl. | desgl. | H | desgl. | Ethyl | |
| 65 | 3,4-Dimethylphenyl | desgl. | H | desgl. | desgl. | |
| 66 | desgl. | desgl. | H | desgl. | Allyl | |
| 69 | 4-Methylphenyl | $CH_3-\underset{\vert}{\overset{\vert}{C}}H$ | $COOCH_3$ | desgl. | desgl. | |

Fortsetzung

| Wirkstoff Nr. | $R^1$ | A | $R^2$ | $R^3$ | $R^4$ | $n_D$/Fp [°C] |
|---|---|---|---|---|---|---|
| 70 | 3-Methylphenyl | $CH_3-CH$ | $COOCH_3$ | n-$C_3H_7$ | Ethyl | |
| 71 | desgl. | desgl. | desgl. | desgl. | Allyl | |
| 79 | Phenyl | $CH_3-CH-$ | desgl. | desgl. | desgl. | |
| 80 | desgl. | desgl. | H | desgl. | $C_2H_5$ | |
| 81 | 4-Chlorbenzyl | 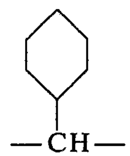 | H | desgl. | desgl. | |
| 82 | desgl. | desgl. | H | desgl. | Allyl | |
| 83 | desgl. | desgl. | H | $C_2H_5$ | desgl. | |
| 84 | desgl. | desgl. | H | desgl. | Ethyl | |
| 85 | desgl. | 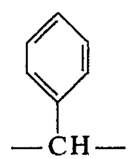 | H | n-$C_3H_7$ | desgl. | |
| 86 | desgl. | desgl. | H | desgl. | Allyl | |
| 99 | Phenyl | $-CH_2-CH_2-CH_2-$ | H | desgl. | Ethyl | |
| 100 | desgl. | desgl. | H | desgl. | Allyl | |

Fortsetzung

| Wirkstoff Nr. | $R^1$ | A | $R^2$ | $R^3$ | $R^4$ | $n_D$/Fp [°C] |
|---|---|---|---|---|---|---|
| 101 | Phenyl | 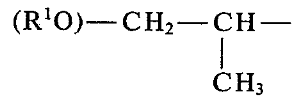 | H | n-$C_3H_7$ | Allyl | |
| 102 | desgl. | desgl. | H | desgl. | Ethyl | |

$^1H$–NMR-spektroskopische Daten, bezogen auf Tetramethylsilan als internem Standard und in $\delta$-Werten (ppm) angegeben. Abkürzungen für die Signalstrukturen:

s = Singulett, d = Dublett, t = Triplett, q = Quartett, m = Multiplett, stärkstes Signal.

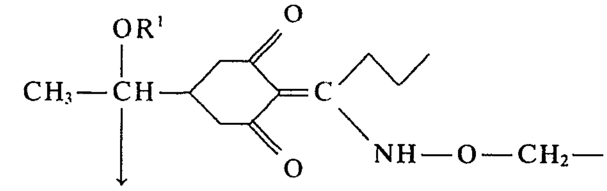

| | | |
|---|---|---|
| 40 | 4,30 (m) | 4,15 (q) |
| 41 | 4,1 (m) | 4,05 (q) |
| 42 | 4,23 (m) | 4,51 (d) |
| 43 | 4,18 (m) | 4,48 (d) |
| 44 | 4,08 (m) | 4,04 (q) |
| 45 | 4,1 (m) | 4,09 (q) |
| 47 | 4,21 (m) | 4,49 (d) |
| 48 | 4,13 (m) | 4,06 (q) |
| 61 | 4,21 (m) | 4,48 (d) |
| 62 | 4,25 (m) | 4,05 (q) |
| 63 | 4,30 (m) | 4,50 (d) |
| 79 | 4,30 (m) | 4,55 (d) |
| 80 | 4,35 (m) | 4,10 (q) |

Die Anwendung der Cyclohexan-1,3-dion-derivate der Formel I als Herbizide erfolgt z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Streichen, Tränken, Vernebeln, Verstäuben, Verstreuen oder Gießen. Die Anwendungsformen richten sich ganz nach den Verwendungszwecken; sie sollen in jedem Fall möglichst die feinste Verteilung der Wirkstoffe gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, zum Beispiel Benzol, Toluol, Xylol, Paraffin, Tetrahydronaphthalin, alkylierte Naphthaline oder deren Derivate, oder zum Beispiel Methanol, Äthanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Herbizide enthalten neben inerten Zusatzstoffen 5 bis 95 Gew.-%, insbesondere 10 bis 80 Gew.-% Cyclohexan-1,3-dion als Wirkstoff.

Als oberflächenaktive Stoffe kommen Alkali-, Erdalkali-, Ammoniumsalze von Ligninsulfonsäure, Naphthalinsulfonsäuren, Phenolsulfonsäuren, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylen-octylphenolether, äthoxyliertes Isooctylphenol-, Octylphenol-, Nonylphenol-, Alkylphenolpolyglykoläther. Tributylphenylpolyglykolether, Alkylarylpolyätheralkoholate, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden wie Kieselsäuren, Silikate, Talkum, Kaolin, Kalk, Bolus, Löß, Ton, Dolomit, Diatomenerde, Calcium- und Magnesiumsulfat, Magnesiumoxid, gemahlene Kunststoffe, Düngemittel, wie z.B. Ammoniumsulfat,

Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Beispiel a

Man vermischt 90 Gewichtsteile der Verbindung 1 mit 10 Gewichtsteilen N-Methyl-alpha-pyrrolidon und erhält eine Lösung, die zur Anwendung in Form kleinster Tropfen geeignet ist.

Beispiel b

10 Gewichtsteile der Verbindung 1 werden in einer Mischung gelöst, die aus 90 Gewichtsteilen Xylol, 6 Gewichtsteilen des Anlagerungsproduktes von 8 bis 10 Mol Äthylenoxid an 1 Mol Ölsäure-N-monoäthanolamid, 2 Gewichtsteilen Calciumsalz der Dodecylbenzolsulfonsäure und 2 Gewichtsteilen des Anlagerungsproduktes von 40 Mol Äthylenoxid an 1 Mol Ricinusöl besteht.

Beispiel c

20 Gewichtsteile der Verbindung 44 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Äthylenoxid an 1 Mol Isooctylphenol und 5 Gewichtsteilen des Anlagerungsproduktes von 40 Mol Äthylenoxid an 1 Mol Ricinusöl besteht.

Beispiel d

20 Gewichtsteile der Verbindung 1 werden in einer Mischung gelöst, die aus 25 Gewichtsteilen Cyclohexanon, 65 Gewichtsteilen einer Mineralölfraktion vom Siedepunkt 210 bis 280°C und 10 Gewichtsteilen des Anlagerungsproduktes von 40 Mol Äthylenoxid an 1 Mol Ricinusöl besteht.

Beispiel e

80 Gewichtsteile der Verbindung 1 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

Beispiel f

5 Gewichtsteile der Verbindung 44 werden mit 95 Gewichtsteilen feinteiligem Kaolin innig vermischt. Man erhält auf diese Weise ein Stäubemittel, das 5 Gewichtsprozent des Wirkstoffs enthält.

Beispiel g

30 Gewichtsprozent der Verbindung 1 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Beispiel h

40 Gewichtsteile der Verbindung 44 werden mit 10 Teilen Natriumsalz eines Phenolsulfonsäure-harnstoff-formaldehyd-kondensats, 2 Teilen Kieselgel und 48 Teilen Wasser innig vermischt. Man erhält eine stabile wäßrige Dispersion. Durch Verdünnen mit 100 000 Gewichtsteilen Wasser erhält man eine wäßrige Dispersion, die 0,04 Gewichtsprozent Wirkstoff enthält.

Beispiel i

20 Teile der Verbindung 1 werden mit 12 Teilen Calciumsalz der Dodecylbenzolsulfonsäure, 8 Teile Fettalkohol-polyglykoläther, 2 Teilen Natriumsalz eines Phenolsulfonsäure-harnstoff-formaldehyd-kondensats und 68 Teilen eines paraffinischen Mineralöls innig vermischt. Man erhält eine stabile ölige Dispersion.

Die Anwendung der Mittel kann im Vorauflaufverfahren oder bei Nachauflaufanwendung, vorzugsweise bei Nachauflaufbehandlung, erfolgen.

Die Aufwandmengen an Wirkstoff betragen je nach Anwendungsziel, Wachstumsstadium und Art der Pflanzen und je nach Witterungsverhältnissen 0,1 bis 15 kg/ha und mehr, vorzugsweise 0,25 bis 1,5 kg/ha.

Der Einfluß der Cyclohexan-1,3-dion-derivate der Formel I auf das Wachstum von erwünschten und unerwünschten Pflanzenarten wurde anhand von Gewächshausversuchen gezeigt.

Als Kulturgefäße dienten Plastikblumentöpfe mit 300 $cm^3$ Inhalt und lehmiger Sand mit etwa 1,5% Humus als Substrat. Die Samen der Testpflanzen säte man nach Arten getrennt flach ein. Für die hier beschriebene Nachauflaufbehandlung zog man die Pflanzen je nach Wuchsform bis zu einer Wuchshöhe von 5 bis 15 cm an. Die Aufwandmengen variierten je nach Wirkstoff. Sie betrugen 0,25, 0,5 oder 1,0 kg Aktivsubstanz/ha.

Die Wirkstoffe wurden in Form einer wäßrigen Suspension oder Emulsion mittels fein verteilender Düsen verspritzt.

Als Vergleichsmittel diente der Wirkstoff

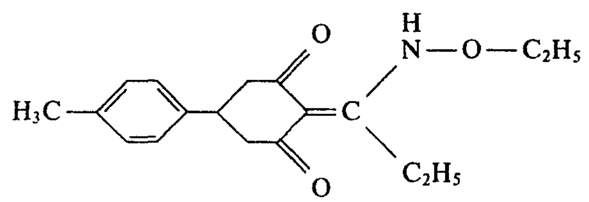

(A)

der in der DE-AS 2 439 104 als herbizid besonders selektiv und wirksam beschrieben ist.

Die Versuchsperiode erstreckte sich über 2 bis 4 Wochen. Während dieser Zeit wurden die Pflanzen gepflegt, und ihre Reaktion auf die einzelnen Behandlungen ausgewertet. Bewertet wurde nach einer Skala von 0 bis 100. Dabei bedeutet 0 keine Schädigung oder normaler Aufgang und 100 kein Aufgang bzw. völlige Zerstörung zumindest der oberirdischen Sproßteile.

Die Testpflanzen setzten sich aus folgenden Pflanzenarten zusammen:

Alopecurus myosuroides (Ackerfuchsschwanzgras), Avena fatua (Flughafer), Beta vulgaris (Zuckerrüben), Lolium multiflorum (Italienisches Raygras), Triticum aestivum (Weizen), Glycine max. (Soja), Echinochloa crus-galli (Hühnerhirse), Setaria italica, Sorghum bicolor (Mohrenhirse, Kulturhirse), Rottboellia exaltata, Hordeum vulgare (Gerste).

Die Versuche ergaben, daß die Verbindung Nr. 44 bei Nachauflaufanwendung von 0,25 kg Wirkstoff/ha gegen die unerwünschten Gräser Alopecurus myosuroides und Avena fatua eine etwas schwächere Wirkung zeigte als das Vergleichsmittel A. Bei einer Aufwandmenge von 1,0 kg/ha Wirkstoff ist die herbizide Aktivität beider Wirkstoffe gegen beide Ungräser identisch. Die Verträglichkeit für Weizen ist bei Verbindung Nr. 44 jedoch eindeutig besser als bei der Vergleichssubstanz A.

Die Versuche zeigten ferner bei Nachauflaufanwendung, daß die Verbindung Nr. 1 mit 0,25 kg Wirkstoff/ha dem Vergleichsmittel A bei gleicher Aufwandmenge bei Bekämpfung der beiden Grasarten Alopecurus myosuroides und Lolium multiflorum überlegen ist. Auch diese Verbindung ist hinsichtlich der Verträglichkeit für Weizen deutlich vorteilhafter als das Vergleichsmittel A.

Bei Nachauflaufanwendung von 1,0 kg Wirkstoff/ha zeigten die Verbindungen Nr. 2, 8, 45, 72 und 73 eine sehr gute Wirkung gegen unerwünschte Grasarten. Die breitblättrige Beispielskulturpflanze Soja wird nicht geschädigt.

Die Verbindungen Nr. 27, 28 und 50 bekämpften mit 0,5 kg Wirkstoff/ha bei Nachauflaufanwendung unerwünschte Grasarten selektiv in Getreidearten, wie Gerste und Weizen, sowie in Soja.

Die Verbindungen der Formel I sind, außer in Getreidearten, vorzugsweise Weizen, auch in breitblättrigen Kulturen, wie Zuckerrüben, Soja, Baumwolle, Raps, Sonnenblumen, sowie in sonstigen nicht zu den Gramineen (Gräserfamilie) zählenden Kulturpflanzen selektiv herbizid wirksam.

Sind gewisse Kulturpflanzen gegenüber den Wirkstoffen weniger tolerant, so können auch Ausbringungstechniken angewandt werden, bei welchen die herbiziden Mittel mit Hilfe der Spritzgeräte so geleitet werden, daß die Blätter empfindlicher Kulturpflanzen nach Möglichkeit nicht getroffen werden, während sie auf die Blätter darunter wachsender unerwünschter Pflanzen oder auf die unbedeckte Bodenfläche gelangen (post directed, lay-by).

Zur Verbreiterung des Wirkungsspektrums und zur Erzielung synergistischer Effekte können die Cyclohexan-1,3-dion-derivate der Formel I mit bekannten Cyclohexan-1,3-dion-derivaten und mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triazinone, Uracile, Benzofuranderivate und andere in Betracht.

Außerdem ist es nützlich, die Wirkstoffe allein oder in Kombination mit anderen Herbiziden auch noch mit weiteren Pflanzenschutzmitteln gemischt gemeinsam auszubringen, beispielsweise mit

Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- oder Spurenelementmängeln eingesetzt werden. Zur Aktivierung der herbiziden Wirkung können auch Netz- und Haftmittel sowie nicht phytotoxische Öle und Ölkonzentrate zugesetzt werden.

## Patentansprüche

1. Cyclohexan-1,3-dion-derivate der Formel

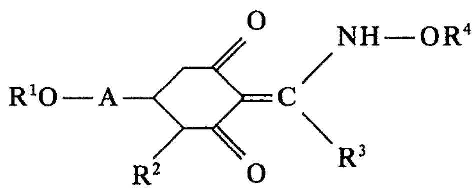

(I)

in der

$R^1$ eine Alkenylgruppe mit 3 oder 4 Kohlenstoffatomen, einen gegebenenfalls durch Halogen, Alkyl, Alkoxy, Nitro, Cyano oder Sulfonyl substituierten Phenyl-, Benzyl-, 2-Phenylethyl- oder Phenylpropylreste,
A einen Alkylen- oder Alkenylenrest mit bis zu 3 Kohlenstoffatomen, der durch 1 oder 2 Alkylgruppen mit 1 bis 5 Kohlenstoffatomen, eine Cyclohexylgruppe, eine Alkenylgruppe mit 2 oder 3 Kohlenstoffatomen, eine Ethinylgruppe oder einen Phenylrest substituiert sein kann,
$R^2$ Wasserstoff, Alkoxycarbonyl mit einem oder zwei Kohlenstoffatomen im Alkoxyrest,
$R^3$ Alkyl mit 1 bis 4 Kohlenstoffatomen und
$R^4$ Alkyl mit 1 bis 3 Kohlenstoffatomen, Alkenyl mit 3 oder 4 Kohlenstoffatomen, Propargyl oder Halogenalkenyl mit 3 oder 4 Kohlenstoffatomen und 1 bis 3 Halogenatomen bedeuten,

und Salze dieser Verbindungen.

2. 2-Ethoxyaminobutyliden-5-(4'-chlorbenzyloxiethanyliden)-cyclohexan-1,3-dion.

3. 2-Ethoxyaminobutyliden-5-(4'-methylphenoxyethanyliden)-cyclohexan-1,3-dion.

4. Verfahren zur Herstellung einer Verbindung der Formel I gemäß Anspruch 1, dadurch gekennzeichnet, daß man eine Verbindung der Formel

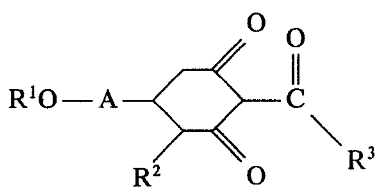

(II)

mit einer Ammoniumverbindung der Formel $R^4$—$ONH_3Y$, wobei A, $R^1$, $R^2$, $R^3$ und $R^4$ die in Anspruch 1 genannten Bedeutungen haben und Y ein Anion bedeutet, in einem inerten Lösungsmittel bei Temperaturen von 0°C bis 80°C in Gegenwart einer Base umsetzt.

5. Verfahren nach Anspruch 4, dadurch gekennzeichnet, daß Alkaliacetat als Base verwendet wird.

6. Verfahren gemäß Anspruch 4, dadurch gekennzeichnet, daß man eine Verbindung der Formel II mit einem Hydroxyl-Amin der Formel $R^4O$—$NH_2$ in an sich bekannter Weise in einem inerten Lösungsmittel umsetzt.

7. Herbizid, enthaltend eine Verbindung der Formel I gemäß Anspruch 1.

8. Herbizid, enthaltend inerte Zusatzstoffe und ein Cyclohexan-1,3-dion-derivat der Formel

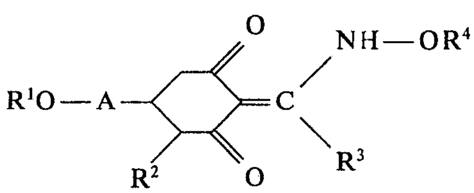

(I)

in der

$R^1$ eine Alkenylgruppe mit 3 oder 4 Kohlenstoffatomen, einen gegebenenfalls durch Halogen, Alkyl, Alkoxy, Nitro, Cyano oder Sulfonyl substituierten Phenyl-, Benzyl-, 2-Phenylethyl- oder Phenylpropylrest,

A einen Alkylen- oder Alkenylenrest mit 1 bis 3 Kohlenstoffatomen, der durch 1 oder 2 Alkylgruppen mit 1 bis 5 Kohlenstoffatomen, eine Cyclohexylgruppe, eine Alkenylgruppe mit 2 oder 3 Kohlenstoffatomen, eine Ethinylgruppe oder einen Phenylrest substituiert sein kann,
$R^2$ Wasserstoff, Alkoxycarbonyl mit einem oder zwei Kohlenstoffatomen im Alkoxyrest,
$R^3$ Alkyl mit 1 bis 4 Kohlenstoffatomen und
$R^4$ Alkyl mit 1 bis 3 Kohlenstoffatomen, Alkenyl mit 3 oder 4 Kohlenstoffatomen, Propargyl oder Halogenalkenyl mit 3 oder 4 Kohlenstoffatomen und 1 bis 3 Halogenatomen bedeuten,

oder Salze dieser Verbindung.

9. Verfahren zur Bekämpfung unerwünschten Pflanzenwuchses, dadurch gekennzeichnet, daß man die Pflanzen und/oder ihren Standort mit einer herbizid wirksamen Menge einer Verbindung der Formel I gemäß Anspruch 1 behandelt.

## Claims

1. A cyclohexane-1,3-dione derivative of the formula

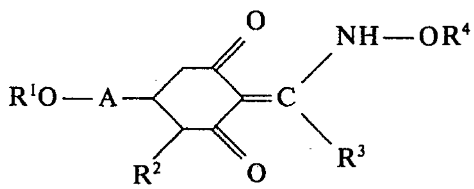

(I)

where $R^1$ is alkenyl of 3 or 4 carbon atoms, or phenyl, benzyl, 2-phenylethyl or phenylpropyl, each of which is unsubstituted or substituted by halogen, alkyl, alkoxy, nitro, cyano or sulfonyl, A is alkylene or alkenylene, each of which is of not more than 3 carbon atoms and may be substituted by 1 or 2 alkyl radicals of 1 to 5 carbon atoms, cyclohexyl, alkenyl of 2 or 3 carbon atoms, ethynyl or phenyl, $R^2$ is hydrogen, or alkoxycarbonyl, where alkoxy is of 1 or 2 carbon atoms, $R^3$ is alkyl of 1 to 4 carbon atoms, and $R^4$ is alkyl of 1 to 3 carbon atoms, alkenyl of 3 or 4 carbon atoms, propargyl, or haloalkenyl of 3 or 4 carbon atoms and 1 to 3 halogen atoms, and salts thereof.

2. 2-Ethoxyaminobutylidene-5-(4'-chlorbenzyloxyethylidene)-cyclohexane-1,3-dione.

3. 2-Ethoxyaminobutylidene-5-(4'-methylphenoxyethylidene)-cyclohexane-1,3-dione.

4. A process for the manufacture of a compound of the formula I as claimed in claim 1, wherein a compound of the formula

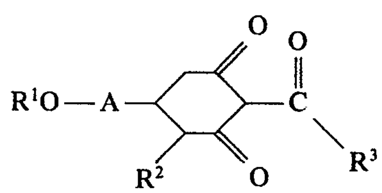

(II)

is reacted with an ammonium compound of the formula $R^4ONH_4Y$, $R^1$, A, $R^2$, $R^3$ and $R^4$ having the meanings given in claim 1 and Y being an anion, in an inert solvent, at from 0° to 80°C, and in the presence of a base.

5. A process as claimed in claim 4, wherein the base used is an alkali metal acetate.

6. A process as claimed in claim 4, wherein a compound of the formula II is reacted in conventional manner in an inert solvent with a hydroxylamine of the formula $R^4O{-}NH_2$.

7. A herbicide containing a compound of the formula I as claimed in claim 1.

8. A herbicide containing inert additives and a cyclohexane-1,3-dione derivative of the formula

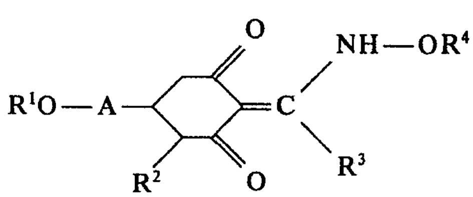

(I)

where $R^1$ is alkenyl of 3 or 4 carbon atoms, or phenyl, benzyl, 2-phenylethyl or phenylpropyl, each of which is unsubstituted or substituted by halogen, alkyl, alkoxy, nitro, cyano or sulfonyl, A is alkylene or alkenylene, each of which is of 1 to 3 carbon atoms and may be substituted by 1 or 2 alkyl radicals of 1 to 5 carbon atoms, cyclohexyl, alkenyl of 2 or 3 carbon atoms, ethynyl or phenyl, $R^2$ is hydrogen, or alkoxycarbonyl, where alkoxy is of 1 or 2 carbon atoms, $R^3$ is alkyl of 1 to 4 carbon atoms,

and $R^4$ is alkyl of 1 to 3 carbon atoms, alkenyl of 3 or 4 carbon atoms, propargyl, or haloalkenyl of 3 or 4 carbon atoms and 1 to 3 halogen atoms, or a salt thereof.

9. A process for combating unwanted plant growth, wherein the plants and/or their location are treated with a herbicidally effective amount of a compound of the formula I as claimed in claim 1.

**Revendications**

1. Dérivés de cyclohexane-1,3-dione de formule

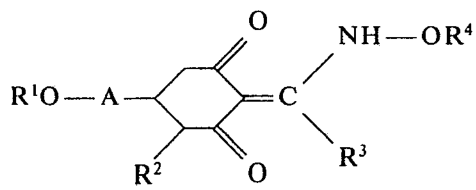

(I)

dans laquelle

$R^1$ représente un groupe alcényle de 3 à 4 atomes de carbone, un reste phényle, benzyle, 2-phényléthyle ou phénylpropyle, éventuellement substitué par halogène, alkyle, alcoxy, nitro, cyano ou sulfonyle,
A représente un reste alkylène ou alcényle ayant jusqu'à 3 atomes de carbone, qui peut être substitué par 1 ou 2 groupes alkyle de 1 à 5 atomes de carbone, un groupe cyclohexyle, un groupe alcényle de 2 à 3 atomes de carbone, un groupe éthinyle ou un reste phényle,
$R^2$ représente hydrogène, alcoxycarbonyle à un ou deux atomes de carbone dans le reste alcoxy,
$R^3$ représente alkyle à 1 à 4 atomes de carbone, et
$R^4$ alkyle à 1 à 3 atomes de carbone, alcényle à 3 ou 4 atomes de carbone, propargyle ou halogénoalcényle à 3 ou 4 atomes de carbone et 1 à 3 atomes d'halogène,

et des sels de ces composés.

2. 2-éthoxyaminobutylidène-5-(4'-chlorobenzyloxiéthanylidène)-cyclohexan-1,3-dione.

3. 2-éthoxyaminobutylidène-5-(4'-méthylphénoxyéthanylidène)-cyclohexan-1,3-dione.

4. Procédé de préparation d'un composé de formule I selon la revendication 1, caractérisé par le fait que l'on fait réagir, dans un solvant inerte, à des températures de 0°C à 80°C, en présence d'une base, un composé de formule

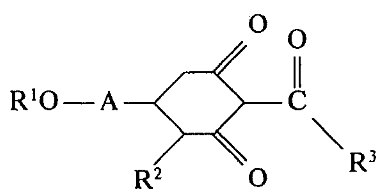

(II)

avec un dérivé d'ammonium de formule $R^4$—$ONH_3Y$, où A, $R^1$, $R^2$, $R^3$ et $R^4$ ont les significations indiquées dans la revendication 1.

5. Procédé selon la revendication 4, caractérisé par le fait que l'on utilise comme base un acétate alcalin.

6. Procédé selon la revendication 4, caractérisé par le fait que l'on fait réagir un composé de formule II, de manière connue en soi, dans un solvant inerte, avec une hydroxylamine de formule $R^4O$—$NH_2$.

7. Herbicide, contenant un composé de formule I selon la revendication 1.

8. Herbicide, contenant des additifs inertes et un dérivé de cyclohexane-1,3-dione de formule

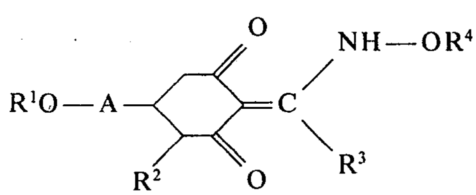

(I)

dans laquelle

$R^1$ représente un groupe alcényle de 3 à 4 atomes de carbone, un reste phényle, benzyle, 2-phényléthyle ou phénylpropyle, éventuellement substitué par halogène, alkyle, alcoxy, nitro, cyano ou sulfonyle,

A représente un reste alkylène ou alcényle ayant jusqu'à 3 atomes de carbone, qui peut être substitué par 1 ou 2 groupes alkyle de 1 à 5 atomes de carbone, un groupe cyclohexyle, un groupe alcényle de 2 à 3 atomes de carbone, un groupe éthinyle ou un reste phényle,
$R^2$ représente hydrogène, alcoxycarbonyle à un ou deux atomes de carbone dans le reste alcoxy,
$R^3$ représente alkyle à 1 à 4 atomes de carbone, et
$R^4$ alkyle à 1 à 3 atomes de carbone, alcényle à 3 ou 4 atomes de carbone, propargyle ou halogéno-alcényle à 3 ou 4 atomes de carbone et 1 à 3 atomes d'halogène,

et des sels de ces composés.

9. Procédé de lutte contre la croissance indésirable de plantes, caractérisé par le fait que l'on traite les plantes et/ou leur biotope avec une quantité active comme herbicide d'un composé de formule I selon la revendication 1.